# EUROPÄISCHE PATENTSCHRIFT

(11) **EP 1 432 834 B1**
(45) Veröffentlichungstag und Bekanntmachung des Hinweises auf die Patenterteilung: **14.11.2018**
(21) Anmeldenummer: 02785113.8
(22) Anmeldetag: 03.09.2002
(51) Int. Cl.: C21C 5/52, F27B 3/19, F27B 3/06, F27B 3/08, F27D 3/15

(54) **VERFAHREN ZUM BETREIBEN EINES KIPPBAREN LICHTBOGENOFENS MIT ANGEBAUTEN ERKER ZUM ABSTECHEN DER SCHMELZE**
METHOD FOR OPERATING A TILTABLE ARC FURNACE WHILE TAPPING
PROCEDE POUR FAIRE FONCTIONNER UN FOUR A ARC BASCULANT EN DÉCHARGE

(30) Priorität: 26.09.2001 DE 10147543; 29.05.2002 DE 10223906
(43) Veröffentlichungstag der Anmeldung: 30.06.2004
(73) Patentinhaber: SMS group GmbH, 40237 Düsseldorf (DE)
(72) Erfinder: HEINRICH, Peter, 47608 Geldern (DE); SCHUBERT, Manfred, 46147 Oberhausen (DE)
(74) Vertreter: Klüppel, Walter
(86) Internationale Anmeldenummer: PCT/EP2002/009794
(87) Internationale Veröffentlichungsnummer: WO 2003/029499

(56) Entgegenhaltungen:
- CH-A- 665 976
- DE-A- 19 919 378
- DE-C- 3 231 434
- US-A- 3 321 116
- US-A- 4 552 343
- US-A- 5 451 035

## Beschreibung

Die Erfindung betrifft ein Verfahren zum Betreiben eines Lichtbogenofens, der zum Abstechen der Schmelze in eine Schwenkrichtung gekippt wird.

Das Abstechen der Schmelze ist aufgrund verschiedener Gestaltungen des Lichtbogenofens bekannt: Das Abstechen kann durch eine offene Gießschnauze und Kippen erfolgen. Der Abstich ist auch durch eine Gießschnauze mit angeschlossenem Siphon möglich. Bei Lichtbogenöfen der bezeichneten Ausführungsformen ist ein exzentrischer Bodenabstich in einem Gefäßerker (EBT) bekannt (DE 82 31 869.7 U1 und DE 198 26 085 A1). Ein solcher exzentrischer Abstich wird auch bei einem ovalen Gefäß (OBT) eingesetzt. Außerdem wird bei runden Gefäßen ein zentrischer Bodenabstich (CBT) angewendet.

Obwohl sich einige dieser Bauarten bewährt haben, kann der Bodenabstich aufgrund betrieblicher Belange noch verbessert werden.

Der Erfindung liegt die Aufgabe zugrunde, sowohl das Betriebsverhalten als auch den Betriebsablauf zu verbessern.

Die gestellte Aufgabe wird erfindungsgemäß mit einem Verfahren umfassend die Merkmale des Anspruchs 1 gelöst.

Das erfindungsgemäße Verfahren zum Betreiben eines Lichtbogenofens, der zum Abstechen der Schmelze in eine Schwenkrichtung gekippt wird, wobei die Schmelze exzentrisch zum Untergefäß abgestochen wird, besteht darin, dass durch Druckbeaufschlagen mit inertem Gas des druck- und vakuumdicht abgedeckten Erkers die Abstichgeschwindigkeit durch Kontrolle des Gasdrucks im Erker geregelt wird. Dabei muss die Abstichöffnung des kippbaren Ofens nicht verschlossen sein. Die sich bei laufendem Abstich je nach Länge des Abstichkanals zwischen Ofenherd und Erker einstellende Heberwirkung, die sich in einem Unterdruck im Erker oberhalb des Badspiegels darstellt, kann durch das Regeln des Gasdrucks beeinflusst werden.

An einem Lichtbogenofen mit einer verschließbaren Abstichöffnung, dessen Untergefäß feststeht und eine Boden-Abstichöffnung aufweist, kann der Abstich in einem separat angebauten, druck- und vakuumdichten Erker vorgesehen sein, der an eine Abschlusswand des Untergefäßes angrenzt, wobei zumindest ein die Ofenwanne und den Erker verbindender Abstichkanal, die Abschlusswand durchdringend, vorgesehen ist, wobei die Unterkante des Abstichkanals auf der Erkerseite und die Oberkante der Erker-Abstichöffnung etwa auf einer Höhe liegen. Dabei muss der Lichtbogenofen nicht mehr kippbar sein, wodurch die gesamte Kippeinrichtung eingespart wird. Außerdem ändern sich die Betriebsabläufe und das Betriebsverhalten.

Der notwendige Gasraum im Erker wird dadurch geschaffen, dass auf dem Erker eine druck- und vakuumdichte Abdeckung vorgesehen ist.

Die Erker-Abstichöffnung kann ferner trotz der Abdeckung dadurch erhalten werden, dass auf der druck- und vakuumdichten Abdeckung ein Hohlstopfen in einem Hohlstopfen-Gehäuse angeordnet ist, das mittels einer Schleuse trennbar oder verbindbar ist und offenbar oder verschließbar ist.

Weitere konstruktive Ausgestaltungen ergeben sich dadurch, dass an die druck- und vakuumdichte Abdeckung eine Gaszuführung mit einem Gasventil angeschlossen ist.

Die vorstehend beschriebene mögliche Ausgestaltungsform mit einem feststehenden Lichtbogenofen kann als Grundlage für ein Verfahren zum Betreiben eines Lichtbogenofens angesehen werden, der feststehend angeordnet ist und einen an dem Unterofen angebauten Erker aufweist, welcher mit einer Erker-Abstichöffnung und mit einer zentrischen Boden-Abstichöffnung versehen ist. Ein solches Verfahren besteht darin, dass nach Öffnen der Erker-Abstichöffnung und Beaufschlagen des Erkers mit inertem Gas die Schmelze derart geregelt abgestochen wird, dass der laufende Abstich durch Reduzieren des Unterdrucks im Erker abgebrochen wird, sobald der Badspiegel im Untergefäß unterhalb der Unterkante des Abstichkanals auf der Erkerseite liegt. Dadurch kann der Abstich ohne großen Aufwand unterbrochen werden.

Eine andere vorteilhafte Verfahrensmaßnahme besteht darin, dass der Gasdruck im Erker und im Abstichkanal auf einen Druckwert eingestellt wird, bei dem der Badspiegel auf die Höhe der Oberkante des zum Untergefäß verlaufenden Abstichkanals gebracht wird. Nach erfolgtem Verschließen der Erker-Abstichöffnung können dadurch der Erker und der Abstichkanal metallfrei gehalten werden. Der Druck im Erker kann dabei so eingestellt werden, dass ein ständiger geringer Gasverbrauch anzeigt, dass Gas auf der zum Ofen hinzeigenden Seite des Abstichkanals in kleiner Menge in das Metallbad einperlt. Ein seitliches Aufbrennen bzw. Wiederverschließen des Abstichkanals wird bei dieser Betriebsweise überflüssig.

Bei der vorstehend beschriebenen Betriebsweise baut sich der Gasdruck im Inneren des Erkers automatisch sofort ab, wenn. die Erker-Abstichöffnung geöffnet wird. Nach einem weiteren Verfahrensschritt kann daher der Abstichvorgang durch Öffnen der Erker-Abstichöffnung begonnen werden. In diesem Moment beginnt der Abstich durch die Abstichkanäle und die Erker-Abstichöffnung zu laufen, ohne dass hierfür eine Kippbewegung des Ofens erforderlich ist. Eine Sandfüllung im Erker-Abstich ist an ihrer Oberfläche nicht verkrustet, da sie keinem flüssigen Metallbad ausgesetzt war. Es kann deshalb davon ausgegangen werden, dass der Abstich sich glatt und problemlos allein durch Wegschwenken einer Schieberplatte öffnet.

Das Verschließen der Erker-Abstichöffnung kann trotz der druck- und vakuumdichten Abdeckung von oben erfolgen. Dazu wird vorgeschlagen, dass die Abstich-Beendigung durch Verschließen der offenen Erker-Abstichöffnung über einen durch die Abdeckung einfahrbaren Hohlstopfen, durch den Sand bis zu einem Schieber eingefüllt wird, erfolgt. Der Sand gelangt daher durch den Hohlstopfen in die Erkerabstichöffnung vor den verschlossenen Schieber und füllt diesen gesamten Raum aus. Der Abstichkanal verhindert, dass etwa auf der Erker-Abstichöffnung liegende Schrottstücke das einwandfreie Funktionieren des Hohlstopfens behindern.

Ein Wechsel des Hohlstopfens ist nach erfolgter Benutzung dadurch möglich, dass der Hohlstopfen nach Verschließen einer Schleuse auf der Abdeckung ausgewechselt wird. Zusätzlich ist ein "Paddel" von Vorteil, um ein Herauslaufen des Sandes aus der Erker-Abstichöffnung zu verhindern.

In der Zeichnung sind Ausführungsbeispiele der nicht Gegenstand der Erfindung sind, dargestellt, die nachstehend näher erläutert werden und auf deren Grundlage auch mehrere Verfahren zum Betreiben des Lichtbogenofens beschrieben werden.

Es zeigen:
- Fig. 1: einen Querschnitt durch einen kippbaren Lichtbogenofen, der nicht Gegenstand der Erfindung ist, wobei nur das Untergefäß dargestellt ist und
- Fig. 2: eine zu Fig. 1 gehörende Draufsicht
- Fig. 3: einen Querschnitt durch einen feststehenden Lichtbogenofen, der nicht Gegenstand der Erfindung ist, wobei nur das Untergefäß dargestellt ist und
- Fig. 4: eine zu Fig. 3 gehörende Draufsicht.

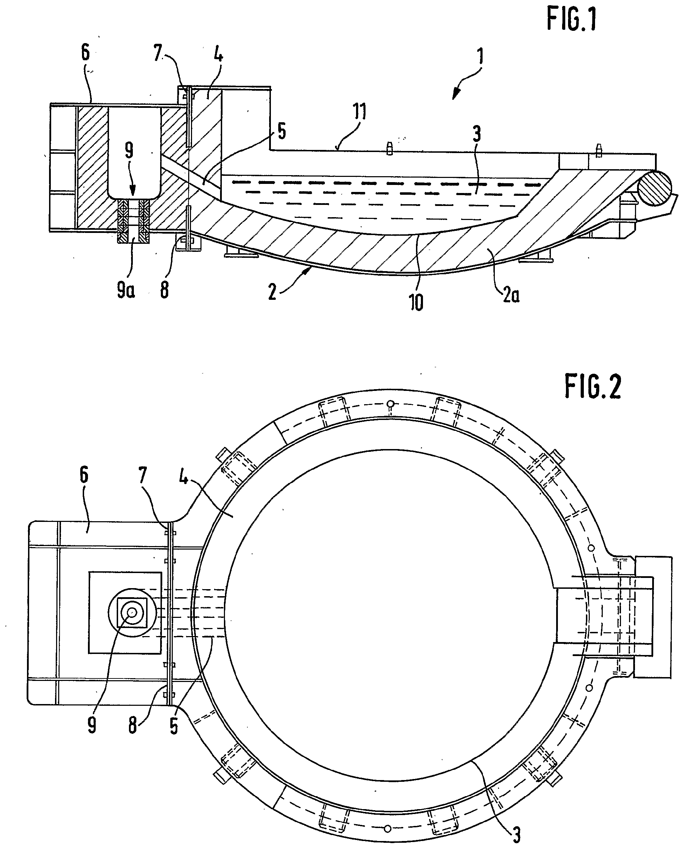

Die nachstehende Beschreibung bezieht sich im Wesentlichen zunächst auf die Fig. 1 und 2. Von einem Lichtbogenofen 1 ist nur das Untergefäß 2 mit der zum Ofenherd 3 ausgemauerten Ofenwanne 2a gezeigt. Der Lichtbogenofen 1 ist nach beiden Schwenkrichtungen kippbar zum Abstechen der Schmelze oder der Schlacke (Fig. 1).

Ein Abstich 9 für die Schmelze befindet sich in einem separat angebauten Erker 6, der an eine als Oberflansch ausgebildete Abschlusswand 4 des kreisrunden oder ovalen Untergefäßes 2 angrenzt (Fig. 2). Vom Ofenherd 3 her verlaufen eine oder mehrere Abstichkanäle 5 quer durch die Abschlusswand 4, die syfonartig etwa mit dem Ausmauerungsprofil 10 tangierend vollends durch die Erkerwandung geführt sind.

Der Erker 6 ist an die Abschlusswand 4 des Untergefäßes 2a mittels einer Flanschverbindung 8 lösbar angeschlossen. Entsprechende Flansche 7 sind am Erker 6 und am Untergefäß 2 vorgesehen. Die Erker-Abstichöffnung 9a verläuft in Null-Stellung 11 des Lichtbogenofens 1 lotrecht. Alternativ kann der Abstich 9 mit seiner Achse mit einem an den Abstichwinkel des Ofens 1 angepassten Winkel ausgeführt sein.

Der Lichtbogenofen 1 kann nunmehr zum Abstechen der Schmelze und der Schlacke in die eine oder die andere Schwenkrichtung gekippt werden, wobei die Schmelze exzentrisch zum Untergefäß 2 abgestochen wird. Dabei werden zunächst im Untergefäß 2 die Abstichkanäle 5 aufgebrannt und bei Austreten der Schmelze in den Erker 6 wird der Kippvorgang eingeleitet. Der Erker 6 wird ausreichend gefüllt und die Erker-Abstichöffnung 9a wird geöffnet und bei erreichter Abstichmenge wird der Lichtbogen-ofen 1 in seine Null-Stellung 11 oder darüber hinaus zurückgekippt.

Eine andere Verfahrensweise kann dahingehend ausgeführt werden, indem zunächst im Untergefäß 2 Abstichkanäle 5 von der Seite des Erkers 6 her aufgebrannt werden und bei Austreten der Schmelze in den Erker 6 durch den unverschlossene Abstich 9 der Kippvorgang eingeleitet wird.

Nach Erreichen der Null-Stellung 11 werden der Abstichkanal 5 und/oder die Erker-Abstichöffnung 9a gereinigt und, soweit erforderlich, mit FF-Material verschlossen.

Alternativ kann nach entsprechend hoher Abstichleistung der Erker 6 zur Neuzustellung in der Flanschverbindung 8 gelöst und durch einen neu zugestellten Erker 6 ersetzt werden.

Der Erker 6 kann außerdem noch vorteilhaft genutzt werden, indem erforderliche Zuschläge und Legierungen oder Teilmengen hiervon während des Abstechens in den Erker 6 eingegeben werden.

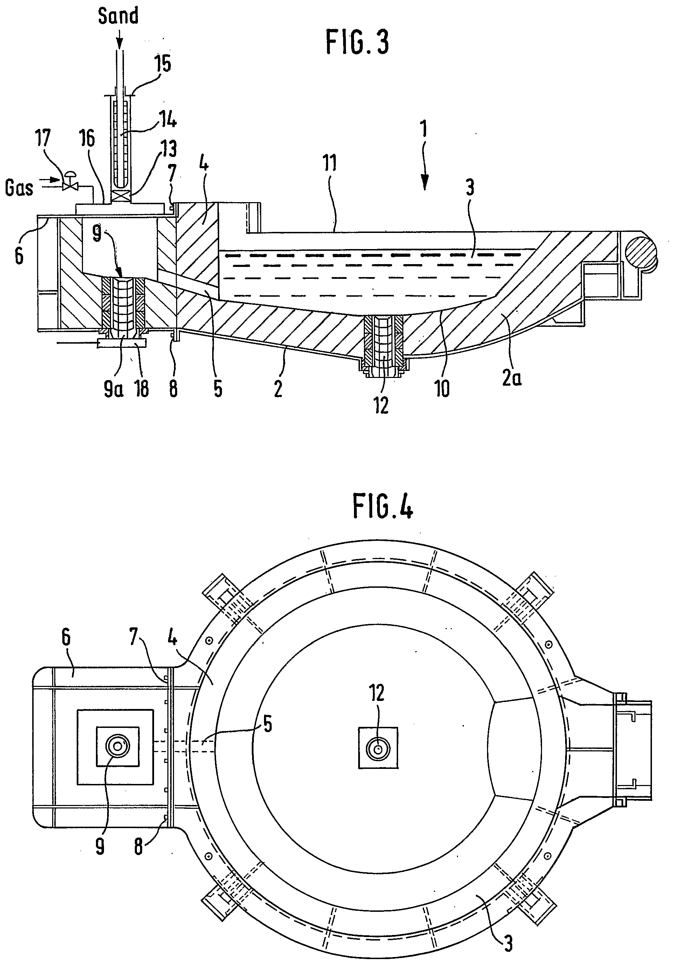

Die nachfolgende Beschreibung ist auf einen feststehenden Ofen der Fig. 3 und 4 gerichtet.

Gemäß Fig. 3 ist ein Verfahrensstand gezeigt, bei dem ein Hohlstopfen 14 durch ein Hohlstopfen-Gehäuse 15 bei geöffneter Schleuse 13 durch die druck- und vakuumdichte Abdeckung 16 (bei geschlossenem Gasventil 17) noch eingefahren ist. Der Erker 6 wird bei geöffnetem Gasventil 17 druckbeaufschlagt. Ein Schieber 18 unterhalb der Erker-Abstichöffnung 9a ist geschlossen. In einem nächsten Verfahrensschritt wird der Hohlstopfen 14 in eine Park- oder Wechselposition (wie gezeichnet) bei durch den Schieber 18 geschlossener Erker-Abstichöffnung 9a gefahren. Der Erker 6 wird druckbeaufschlagt. Dabei perlt inertes Gas an der Oberkante des Abstichkanals 5 im Ofenherd 3 aus. In einem dritten Verfahrensschritt beginnt der Abstich. Der Schieber 18 wird geöffnet Die vorhandene Sandfüllung ist herausgelaufen und der Erker 6 ist drucklos gegen Atmosphäre. Jetzt läuft der Abstich des flüssigen Metalls. Einige Sekunden nach Abstichbeginn läuft das flüssige Metall durch die Erker-Abstichöffnung 9a. In einem vierten Verfahrensschritt baut sich im Erker ein Unterdruck nach dem Heberprinzip auf. Der Hohlstopfen 14 befindet sich nach wie vor in der Park- oder Wechselposition. In einem fünften Verfahrensschritt fährt der Hohlstopfen 14 ein und der Schieber 18 schließt, Sand läuft ein und der Erker 6 wird mit Gas beaufschlagt. Der Erker 6 läuft leer, ebenso der Abstichkanal 5. Der Hohl-stopfen 14 fährt aus in Park- oder Wechselstellung.

Aus der Boden-Abstichöffnung 12 kann der Ofen bei Bedarf vollständig entleert werden.

## Patentansprüche

1. Verfahren zum Betreiben eines Lichtbogenofens (1), der zum Abstechen der Schmelze in eine Schwenkrichtung gekippt wird, wobei die Schmelze exzentrisch zum Untergefäß (2) abgestochen wird,
**dadurch gekennzeichnet,**
**dass** durch Druckbeaufschlagen mit inertem Gas des druck- und vakuumdicht abgedeckten Erkers (6) die Abstichgeschwindigkeit durch Kontrolle des Gasdrucks im Erker geregelt wird.

## Claims

1. Method of operating an electric arc furnace (1), which is tilted in a pivot direction for tapping the melt, wherein the melt is tapped eccentrically with respect to the underneath basin, **characterised in that** through pressurisation of a bay (6), which is pressure-tightly and vacuum-tightly covered, with inert gas the rate of tapping is regulated by control of the gas pressure in the bay.

## Revendications

1. Procédé pour l'exploitation d'un four à arc électrique (1) qui bascule dans une direction de pivotement pour le soutirage de la masse fondue ; dans lequel la masse fondue est soumise à un soutirage excentrique par rapport à la carcasse (2), **caractérisé en ce que**, via une mise sous pression avec un gaz inerte de la saillie (6) recouverte d'une manière qui la rend étanche à la pression et au vide, on règle la vitesse de soutirage par le contrôle de la pression du gaz dans la saillie.
